# EUROPÄISCHE PATENTSCHRIFT

(11) **EP 3 686 329 B1**
(45) Veröffentlichungstag und Bekanntmachung des Hinweises auf die Patenterteilung: **11.05.2022**
(21) Anmeldenummer: 19153746.3
(22) Anmeldetag: 25.01.2019
(51) Int. Cl.: D01H 1/38, B65H 65/00

(54) **BE- UND ENTLASTUNGSEINRICHTUNG FÜR EINE FADENKLEMMVORRICHTUNG UND FADENKLEMMVORRICHTUNG**
LOADING AND UNLOADING MEANS FOR A THREAD CLAMPING DEVICE AND THREAD CLAMPING DEVICE
DISPOSITIF DE CHARGE ET DE DÉCHARGE POUR UN DISPOSITIF PINCE-FIL ET DISPOSITIF PINCE-FIL

(43) Veröffentlichungstag der Anmeldung: 29.07.2020
(73) Patentinhaber: Saurer Spinning Solutions GmbH & Co. KG, 52531 Übach-Palenberg (DE)
(72) Erfinder: Winter, Josef, 73650 Winterbach (DE)
(74) Vertreter: Morgenthum-Neurode, Mirko

(56) Entgegenhaltungen:
- EP-A1- 2 881 351
- EP-A1- 3 260 406
- DE-A1-102006 022 484

## Beschreibung

Die Erfindung betrifft eine Be- und Entlastungseinrichtung für eine Fadenklemmvorrichtung einer drehbeweglichen Spinn- oder Zwirnmaschinenspindel sowie eine Fadenklemmvorrichtung, welche ausgebildet ist, eine solche Be- und Entlastungseinrichtung aufzunehmen.

Bekanntlich muss bei Ringspinnmaschinen nach dem Fertigstellen von Spinnkopsen auf wenigstens einer Maschinenlängsseite zunächst ein sogenanntes Abspinnen durchgeführt werden, durch das die betroffene linke oder rechte Maschinenseite der Ringspinnmaschinen für einen nachfolgenden Spinnkopswechsel vorbereitet wird.

In diesem Zusammenhang ist es bei Ringspinnmaschinen seit langem üblich, dass nach Fertigstellung der Spinnkopse einer Maschinenlängsseite die Ringbank aus einer oberen Stellung verhältnismäßig rasch zum unteren Bereich der Spinnhülsen der Spinnkopse gefahren wird und dabei die Fäden jeweils in relativ steilen Schraubenlinien (sog. Hinterwindungen) über die Oberflächen der Spinnkopse nach unten geführt werden. Die Ringbank kann anschließend in dieser Stellung abgebremst werden, mit der Folge, dass sich die Fäden jeweils in mehreren Windungen um den unteren Bereich der Spinnhülsen der Spinnkopse legen. Durch diese sogenannten Schutzwindungen können die Fäden der Spinnkopse für einen nachfolgenden Weitertransport gesichert werden.

Anschließend wird die Ringbank zügig erneut definiert weiter nach unten zu einer sogenannten Aufwickelstelle der Spindeln gefahren und dort abgebremst. Im Bereich der Aufwickelstellen der Spindeln werden die Fäden erneut in mehreren Windungen aufgewickelt.

Diese auf den sogenannten Aufwickelstellen der Spindeln festgelegten Unterwindungen bilden jeweils einen Anspinnfaden, der nach dem Spinnkopswechsel zum Wiederanspinnen benötigt wird. Das heißt, nach dem Abziehen der fertiggestellten Spinnkopse von den Spindeln der Ringspinnmaschine, bei dem die Fäden jeweils zwischen Hinterwindung und Unterwindung getrennt werden, und dem Aufsetzen neuer Spinnhülsen wird die Ringbank wieder nach oben in den unteren Bereich der Spinnhülsen gefahren und die Anspinnfäden an die neuen Spinnhülsen gewickelt.

Nachteilig bei einem solchen Verfahren ist, dass die Unterwindungen auf den Aufwickelstellen der Spindeln verbleiben und diese nach einer bestimmten Anzahl von Spinnkopswechseln relativ aufwendig und oft nur mit unzureichendem Erfolg aus dem Unterwindebereich entfernt werden müssen.

Um die Spinnkopswechsel zu erleichtern, insbesondere die aufwendige Reinigung der Aufwickelstellen der Spindeln zu vermeiden, sind deshalb in der Vergangenheit bereits verschiedene Vorschläge unterbreitet worden, im Unterwindebereich einer Spindel eine Fadenklemmvorrichtung anzuordnen, die ein temporäres Fixieren des Fadens ermöglicht und damit ein Aufwinden des Fadens auf den Unterwindebereich der Spindel überflüssig macht.

Durch das Dokument DE 196 28 826 A1 ist eine Fadenklemmvorrichtung bekannt, welche ein auf einem Wirtel einer Spindel fest angebrachtes erstes Klemmelement und ein axial zur Längsachse der Spindel verschiebbar gelagertes zweites Klemmelement aufweist. Die Klemmelemente werden durch eine Druckfeder, die sich am verschiebbar gelagerten zweiten Klemmelement und dem Wirtel abstützt, gegeneinander gepresst, so dass zwischen den Klemmelementen ein Klemmmoment gegeben ist.

Um die Fadenklemmvorrichtung durch das Verschieben des verschiebbaren zweiten Klemmelementes entgegen der Kraft der Druckfeder zu öffnen, weist das zweite Klemmelement eine nach innen geneigte konische Ringfläche auf, die mit dem feststehenden ersten Klemmelement eine Ringkammer begrenzt, in welcher Fliehkraftelemente in Form beweglich gelagerter Kugeln angeordnet sind. Bei Überschreitung einer Grenzdrehzahl der Spindel ist die von den Fliehkraftelementen auf das verschiebbare Klemmelement aufgebrachte Kraft größer als die Federkraft der Druckfeder, was zu einer Bewegung des verschiebbar gelagerten zweiten Klemmelementes in axialer Richtung und dadurch zum Öffnen der Fadenklemmvorrichtung führt.

Bei Unterschreitung der Grenzdrehzahl der Spindel geht die Fadenklemmvorrichtung wieder in eine Klemmstellung, in der die Stirnflächen der beiden Klemmelemente gegeneinander gepresst werden. Außerdem greift eine an der Stirnfläche des verschiebbar gelagerten zweiten Klemmelementes angeordnete Schulter in eine korrespondierende Ringnut an der Stirnfläche des feststehenden ersten Klemmelementes ein, um die Ringkammer gegenüber dem Klemmspalt abzuschotten.

Als nachteilig bei dieser Art von Fadenklemmvorrichtungen hat sich erwiesen, dass es trotz der Anordnung einer Schulter und einer zugehörigen Ringnut nicht gelungen ist, das Eindringen von Fadenresten in die Ringkammer zu verhindern, mit der Folge, dass die darin angeordneten beweglich gelagerten Kugeln zumindest teilweise blockiert werden, was oft zu einer starken Beeinträchtigung der Funktionalität der Fadenklemmvorrichtung führt.

Mit dem Dokument DE 10 2008 058 655 A1 wird eine Fadenklemmvorrichtung vorgeschlagen, welche über eine Vielzahl sich in radialer Richtung erstreckender Halbschalen, in denen Fliehkraftelemente angeordnet und geführt sind, verfügt. Eine Hälfte der Halbschalen ist dabei jeweils an dem verschiebbar gelagerten zweiten Klemmelement und die andere Hälfte der jeweils korrespondierenden Halbschalen an einem fest angeordneten Sockelelement angeordnet. Die Halbschalen des verschiebbaren zweiten Klemmelementes sind außerdem jeweils mit einer zur Horizontalen geneigten Kulisse und die korrespondierenden Halbschalen des Sockelelementes jeweils mit einer horizontalen Kulisse ausgestattet. Des Weiteren sind die zur Horizontalen geneigten Kulissen der Halbschalen des verschiebbaren zweiten Klemmelementes derart ausgebildet, dass sie ausgehend von der Halbschale des verschiebbaren Klemmelementes in Richtung der Längsachse des Spindeloberteiles einen anderen Neigungswinkel aufweisen, als ausgehend von dem Sockelelement in Richtung der Halbschale des verschiebbaren Klemmelementes.

Auch die in dem Dokument EP 2 530 041 A1 beschriebene Fadenklemmvorrichtung verfügt, wie üblich, über ein feststehendes erstes Klemmelement sowie ein bezüglich des ersten Klemmelementes axial zur Längsachse der Unterwindehülse verschiebbar gelagertes zweites Klemmelement, das durch ein Belastungselement in Form einer Schraubenfeder in Richtung des ersten Klemmelements beaufschlagt wird. Außerdem sind auch hier Entlastungselemente in Form von beweglich gelagerten Kugeln vorhanden, die das zweite Klemmelement fliehkraftbedingt beaufschlagen und dafür sorgen, dass die Fadenklemmvorrichtung ab einer bestimmten Spindeldrehzahl geöffnet wird und den Faden freigibt. Um zu verhindern, dass während des Betriebes Schmutz zu den Lagerstellen der Entlastungselemente gelangen kann, ist außerdem die Unterwindehülse mit einer Anschlagfläche versehen, auf der das zweite Klemmelement im Öffnungszustand der Fadenklemmvorrichtung aufsitzt.

Die vorstehend beschriebenen Fadenklemmvorrichtungen haben sich in der Praxis mehr oder weniger bewährt, sind jedoch, insbesondere aufgrund ihrer als beweglich gelagerte Kugeln ausgebildeten Fliehkraftelemente, nach wie vor relativ empfindlich gegen Verschmutzungen. Das bedeutet, bei den bekannten Fadenklemmvorrichtungen sind bezüglich eines ordnungsgemäßen, weitestgehend unterbrechungsfreien Dauerbetriebes durchaus weitere Verbesserungen möglich.

Das Dokument EP 3 260 406 A1 schlägt zur Lösung eine Fadenklemmvorrichtung mit einer aus einem Federringelement ausgebildeten Be- und Entlastungseinrichtung vor, wobei das Federringelement an einer stationär angeordneten Unterwindehülse der Spindel geführt ist und funktionell mit dem dazu axial verschiebbar gelagerten zweiten Klemmelement in Verbindung steht. Das Federringelement ist mit Fliehkraftelementen bestückt, die, abhängig von der Drehzahl der Spindel, die Form des Federelements beeinflussen und damit die Stellung des zweiten Klemmelementes vorgeben. Eine solche Fadenklemmvorrichtung besteht aus wenigen Einzelteilen, die durch eine einfache, unkomplizierte Montage zu einer kompakten Fadenklemmvorrichtung ergänzt werden können. Dadurch kann ein restefrei arbeitendes Unterwindesystem, das, insbesondere durch die weitestgehend reibungsunabhängige Betätigung der Fliehkraftelemente, bezüglich Verschmutzung sehr unempfindlich ist, bereitgestellt werden.

Mit der vorliegenden Erfindung soll es ermöglicht werden, eine Fadenklemmvorrichtung bereitzustellen, welche insbesondere mit Blick auf Einstellbarkeit, Kompaktheit, Lebensdauer und/oder Anpassung der Fadenklemmvorrichtung auf die unterschiedlichen Garnmaterialien weiter verbessert ist.

Dazu wird nach einem Aspekt der vorliegenden eine Be- und Entlastungseinrichtung mit einem Federringelement vorgeschlagen, welche auf dem mit dem Dokument EP 3 260 406 A1 bereits bekannten Knackfrosch-Prinzip beruht.

Im Besonderen umfasst die Be- und Entlastungseinrichtung ein Federringelement, welches in bekannter Weise zwischen einem stabilen Zustand und einem metastabilen Zustand schlagartig überführbar ist, wobei an einem inneren Rand des Federringelementes eine innere Halteeinrichtung zum Anschluss an eine stationäre Unterwindehülse der Spinn- oder Zwirnmaschinenspindel und an dem äußeren Rand des Federringelementes eine äußere Halteeinrichtung zum Anschluss an ein relativ zu der stationären Unterwindehülse, axial zu der Längsachse der Unterwindehülse verschiebbares Klemmelement der Spinn- oder Zwirnmaschinenspindel angeordnet ist. Die Be- und Entlastungseinrichtung umfasst ferner eine Halte- und Führungseinrichtung zum führenden Halten von Fliehkraftelementen zwischen einer stabilen Position und einer metastabilen Position, welche durch eine Relativbewegung zwischen der äußeren und inneren Halteeinrichtung einnehmbar sind, wobei das Federringelement in der stabilen Position den stabilen Zustand und in der metastabilen Position den metastabilen Zustand einnimmt.

Die vorliegende Erfindung zeichnet sich dadurch aus, dass die Halte- und Führungseinrichtung wenigstens eine Aufnahme für ein Fliehkraftelement aufweist, welche von einem den inneren und äußeren Rand miteinander koppelnden Ringflächenabschnitt des Federringelements beabstandet angeordnet ist.

Die vorgeschlagene Ausbildung hat insbesondere den Vorteil, dass auftretende Fliehkräfte über die Fliehkraftelemente in weiter definierter und somit verbesserter Weise auf das Federringelement wirken können, um dieses so zu verformen, dass sich das Federringelement, das über die äußere Halteeinrichtung funktional mit dem zweiten Klemmelement verbunden ist, und somit das angeschlossene zweite Klemmelement definiert in axialer Richtung, also in einer von dem ersten Klemmelement wegführenden als auch in einer zu dem ersten Klemmelement hinführenden Richtung, schlagartig bewegen kann. Eine von dem ersten Klemmelement wegführende Bewegung des zweiten Klemmelementes korrespondiert zu einem Öffnen der Fadenklemmvorrichtung, wohingegen die zu dem ersten Klemmelement hinführende Bewegung des zweiten Klemmelementes bis zur Anlage an dem ersten Klemmelement einem Schließen der Fadenklemmvorrichtung gleichkommt.

Im Unterschied zu den vorbekannten Lösungen ist das Fliehkraftelement zu der Ringfläche erhaben bzw. beabstandet angeordnet. Dadurch ist unter anderem das schlagartige, meist von einem Knackgeräusch begleitete Umschalten zwischen dem stabilen Zustand und dem metastabilen Zustand unter Ausnutzung der aufgrund der beabstandeten Anordnung ermöglichten Hebelwirkung definierter einstellbar bzw. feiner justierbar. Mit anderen können nun exaktere als auch geringere Drehzahlwerte als Grenzwert für das schlagartige Umschalten bei Fadenklemmvorrichtungen umfassend eine solche Be- und Entlastungseinrichtung festgelegt werden. Dies führt des Weiteren zu einer materialschonenderen Beanspruchung des Federringelementes, welches sich positiv auf die Lebensdauer auswirkt. Weiterhin lassen sich mit einer solchen Drehzahl anpassbaren Fadenklemmvorrichtung unterschiedliche Garnmaterialien verarbeiten. Darüber hinaus ermöglicht die Ausgestaltung des Federringelementes eine weitere konstruktive Vereinfachung durch Entfall des ansonsten erforderlichen Stellrings.

Nach einer bevorzugten Ausführungsform weist die innere Halteeinrichtung ein querschnittlich V- oder L-förmiges Halteelement zum federelastischen Eingriff mit einer korrespondierenden Aufnahme der Unterwindehülse auf. Das Federringelement lässt sich damit in definierter Weise an der Unterwindehülse beschädigungsfrei auswechselbar befestigen.

Das Federringelement ist bevorzugt aus einem Federstahlblech ausgebildet, welches sich im Besonderen begünstigend auf die Lebensdauer auswirkt. Besonders bevorzugt ist das Federringelement ein Stanzbiegebauteil, wodurch das Federringelement kostengünstig herstellbar ist. Alternativ dazu kann das Federringelement in Abhängigkeit der Anforderungen an das selbige aus einem kunststoffhaltigen Material mit federelastischen Eigenschaften oder aus einer Kombination eines Federstahlbleches mit kunststoffhaltigen Elementen ausgestaltet sein.

Gemäß einer bevorzugten Ausführungsform weist die innere Halteeinrichtung oder die äußere Halteeinrichtung zwei Haltelemente auf, die an sich gegenüberliegenden Ringsegmenten des Federringelementes angeordnet sind. Dadurch kann das schlagartige Umschalten zwischen dem stabilen und metastabilen Zustand in zuverlässiger Weise mit möglichst geringem Kraftbedarf und unter Vermeidung einer Verkantung des Federringelements während des Umschaltvorgangs gewährleistet werden. Weiterhin kann das Federringelement materialsparend ausgebildet werden.

Vorzugsweise können im Bedarfsfall weitere Halteelemente vorgesehen sein, um den Vorgang des schlagartigen Umschaltens begünstigend zu unterstützen. Die Anordnung der weiteren Halteelemente kann bedarfsgerecht gewählt sein.

Alternativ dazu kann die innere oder äußere Halteeinrichtung vorzugsweise nur ein Halteelement aufweisen, welches eine solche Erstreckungslänge entlang des inneren bzw. äußeren Randes aufweist, das eine den Umschaltvorgang behindernde Verkantung des Federringelementes während des Umschaltvorgangs unterbunden werden kann.

Nach einer bevorzugten Ausführungsform weist die Aufnahme einen dem Ringflächenabschnitt gegenüberliegenden und zu diesem beabstandeten unteren Auflageabschnitt für das Fliehkraftelement und einen seitlichen Anlageabschnitt zur Anlage des Fliehkraftelementes auf einer der Unterwindehülse abgewandten Seite des Fliehkraftelementes auf, wobei die Aufnahme insbesondere querschnittlich L-förmig ausgebildet ist. Diese Ausgestaltung begünstigt insbesondere eine klemmende Anordnung des Fliehkraftelementes zwischen der Aufnahme und der Unterwindehülse.

Vorzugsweise weist die Halte- und Führungseinrichtung einen die Aufnahme tragenden Halteabschnitt auf, welcher sich schräg zu einer den Ringflächenabschnitt umfassenden Flächenebene erstreckt und an dem äußeren Rand angeordnet oder mit diesem über einen von dem äußeren Rand in einer von der Federringelementmitte wegführenden Richtung abragenden Verbindungsabschnitt gekoppelt ist. Dadurch kann die Hebelwirkung auf das Federringelement bzw. die für das Umschalten erforderliche Umschaltkraft geeignet vorgesehen werden.

Nach einem weiteren Aspekt der vorliegenden Erfindung wird eine Fadenklemmvorrichtung für eine Spinn- oder Zwirnmaschinenspindel vorgeschlagen, wobei die Fadenklemmvorrichtung ein an einem Spindeloberteil der Spinn- oder Zwirnmaschinenspindel stationär anordbares erstes Klemmelement, eine an dem Spindeloberteil benachbart zu dem ersten Klemmelement stationär anordbare Unterwindehülse und ein relativ zu der Unterwindehülse, axial zur der Längsachse der Unterwindehülse verschiebbares zweites Klemmelement aufweist. Die Fadenklemmvorrichtung ist ausgebildet, eine Be- und Entlastungseinrichtung nach einer der vorstehend bevorzugt beschriebenen Ausführungsformen aufzunehmen, welche ein Federringelement umfasst, das zwischen einem stabilen Zustand, in welchem das zweite Klemmelement in Richtung des ersten Klemmelementes federkraftbedingt beaufschlagt ist, und einem metastabilen Zustand, in welchem das zweite Klemmelement fliehkraftbedingt durch auf das Federringelement einwirkende Fliehkraftelement beabstandet zu dem ersten Klemmelement positioniert ist, schlagartig überführbar ist, wobei das Fliehkraftelement zwischen der Unterwindehülse und dem zweiten Klemmelement bewegbar anordbar ist.

Die Fadenklemmvorrichtung zeichnet sich durch die Be- und Entlastungseinrichtung nach einem der vorbeschriebenen bevorzugten Ausführungsformen aus. Die Unterwindehülse weist dabei einen außenseitigen Anschlagflächenabschnitt für das Fliehkraftelement oder für einen das Fliehkraftelement haltenden Aufnahmeabschnitt auf, gegen welchen das Fliehkraftelement bzw. der Aufnahmeabschnitt in Folge des schlagartigen Überführens des Federringelements in den stabilen Zustand zur Anlage gelangt.

Vorzugsweise umfasst das zweite Klemmelement auf einer der Unterwindehülse gegenüberliegenden Innenseite eine Aufnahmeeinrichtung zur Aufnahme des Fliehkraftelements in dem metastabilen Zustand des Federringelementes, wobei die Aufnahmeeinrichtung Haltestege aufweist, die in Umfangsrichtung des zweiten Klemmelementes zur zwischenliegenden Anordnung des Fliehkraftelementes einander gegenüberliegen. Besonders bevorzugt umfasst das zweite Klemmelement in einem Bereich zwischen den Haltestegen einen Kopfsteg zum Unterbinden eines Entweichens des aufgenommenen Fliehkraftelementes in Richtung des ersten Klemmelementes. Das in dem metastabilen Zustand aufgenommene Fliehkraftelement kann dadurch zuverlässig von dem zweiten Klemmelement in der metastabilen Position gehalten werden.

Weiterhin bevorzugt umfasst das zweite Klemmelement auf einer der Unterwindehülse gegenüberliegenden Innenseite wenigstens eine weitere Aufnahme zur haltenden Aufnahme eines Kompensationselements. Mittels des Vorsehens eines solchen Kompensationselements kann einer möglichen fliehkraftbedingten Verformung des zweiten Klemmelementes zuverlässig entgegengetreten werden. Eine solche Verformung könnte eine zuverlässige Klemmung des Garns behindern. In bevorzugter Weise ist eine Anzahl der weiteren Aufnahmen zur jeweiligen Aufnahme eines Kompensationselements in Abhängigkeit der Anordnung und Anzahl der Fliehkraftelemente ausgewählt, um der Verformung geeignet entgegenwirken zu können. Beispielsweise können bei zwei einander gegenüberliegend angeordneten Fliehkraftelementen gleichfalls zwei einander gegenüberliegend angeordnete Kompensationselemente vorgesehen sein, wobei die Fliehkraftelemente, die Kompensationselemente und deren entsprechenden Aufnahmen umläufig der Fadenklemmeinrichtung gleichverteilt vorgesehen sind. Das Kompensationselement kann in weiter bevorzugter Ausführungsform durch ein Fliehkraftelement ausgebildet sein. Weiterhin bevorzugt kann das Kompensationselement von der zugeordneten weiteren Aufnahme beschädigungsfrei auswechselbar gehalten sein.

Gemäß einer Ausführungsform der vorliegenden Erfindung ist das zweite Klemmelement aus einem Deckelelement und einem mit dem Deckelelement verbindbaren Bodenelement ausgebildet. Besonders bevorzugt ist die das Fliehkraftelement in dem metastabilen Zustand haltende Aufnahmeeinrichtung mit dem Deckelement ausgeformt. Weiterhin bevorzugt sind das Deckelelement und das Bodenelement ausgebildet, die äußere Halteeinrichtung des Federringelements im verbundenen Zustand des zweiten Klemmelementes einzuklemmen. Dadurch kann die Fadenklemmvorrichtung als auch deren Montage weiter vereinfacht werden, da im Vergleich zu den bekannten Fadenklemmvorrichtungen jedenfalls auf den erforderlichen Stellring verzichtet werden kann.

Bezüglich der Anbindung der Fliehkraftelemente an das Federringelement sind verschiedene Varianten aus dem Dokument EP 3 260 406 A1 bekannt, wobei es sich als vorteilhaft erwiesen hat, wenn die Fliehkraftelemente vorzugsweise so mit dem Federringelement wirkverbunden sind, dass sie im Bedarfsfall in unterschiedlichen Abmessungen und Massen eingesetzt werden können, um zum Beispiel bei Grobgarn mit niedrigen Öffnungs- und Schließdrehzahlen fahren zu können.

Eine Anbindung des Fliehkraftelementes an das Federringelement lässt sich beispielsweise in bekannter Weise mittels einer formschlüssigen Verbindung, zum Beispiel einer Schraub-, einer Klips-, oder einer Nietverbindung, an der Aufnahme des Federringelementes realisieren. Alternativ dazu kann das Fliehkraftelement mittels einer kraft- oder stoffschlüssigen Verbindung, zum Beispiel mittels Schweißens, Lötens oder Klebens, an der Aufnahme des Federringelements befestigt sein.

Als besonders vorteilhaft hat sich insbesondere in Verbindung mit der zu dem Ringflächenabschnitt beabstandeten Anordnung der Aufnahme gezeigt, dass das Fliehkraftelement zwischen der Aufnahme und einer Außenseite der Unterwindehülse über die von dem Federringelement, insbesondere von der Aufnahme ausgehenden Federkraft in einem stabilen Zustand der Fadenklemmvorrichtung klemmbar ist. Mit anderen Worten kann auf die bekannte kraft-, stoff- oder formschlüssige Verbindung des Fliehkraftelementes mit dem Federringelement verzichtet werden. Die bloße, lose Klemmung des Fliehkraftelementes ermöglicht ein Austausch des Fliehkraftelements mit einem dazu unterschiedlichen Fliehkraftelement, welches sich in dem Abmaß und/oder Gewicht unterscheidet, in weiter vereinfachter Weise.

In bevorzugter Weise kann das Fliehkraftelement eine dropsförmige Gestalt aufweisen, welche sich durch eine Scheibenform mit einer Scheibendicke im Bereich der Dropsmitte, die unterschiedlich zu der Scheibendicke im Bereich des Dropsrandes ist, kennzeichnet. Der Dropsrand kann bedarfsgerecht ausgebildet sein, um in geeigneter Weise auf dem außenseitigen Anschlagsflächenabschnitt zur Anlage gelangen zu können, wohingegen die Dropsmitte als eine Druckkontaktfläche für die Aufnahme des Federringelementes geeignet vorgesehen werden kann.

Besonders bevorzugt ist das Fliehkraftelement in einer Draufsicht kreisförmig und weiterhin bevorzugt bezüglich einer durch die Mitte verlaufenden horizontalen oder vertikalen Symmetrieebene symmetrisch ausgebildet. Somit kann das Fliehkraftelement ungeachtet seiner Ausrichtung in vereinfachter Weise zwischen der Aufnahme und der Unterwindehülse positioniert werden.

Ausführungsbeispiele der Erfindung sind nachstehend mit Bezug auf die Zeichnungen erläutert. In den Zeichnungen zeigen:
- Fig. 1: eine perspektivische Ansicht einer Be- und Entlastungseinrichtung nach einem bevorzugten Ausführungsbeispiel mit einem Fliehkraftelement,
- Fig. 2: eine Querschnittsansicht des in Fig. 1 gezeigten Fliehkraftelementes nach einem bevorzugten Ausführungsbeispiel,
- Fig. 3: eine Seitenansicht einer Explosionsdarstellung einer Fadenklemmvorrichtung nach einem bevorzugten Ausführungsbeispiel umfassend die in Fig. 1 gezeigte Be- und Entlastungseinrichtung in einem stabilen Zustand im Sinne "Schließen der Fadenklemmvorrichtung",
- Fig. 4: eine Seitenansicht einer Explosionsdarstellung der in Fig. 3 gezeigten Fadenklemmvorrichtung umfassend die in Fig. 1 gezeigte Be- und Entlastungseinrichtung in einem metastabilen Zustand im Sinne "Öffnen der Fadenklemmvorrichtung",
- Fig. 5: eine perspektivische Unteransicht eines Deckelelementes einer zweiten Klemmvorrichtung nach einem bevorzugten Ausführungsbeispiel der in Fig. 3 und 4 gezeigten Fadenklemmvorrichtung, und
- Fig. 6: eine perspektivische Draufsicht eines Bodenelementes einer zweiten Klemmvorrichtung nach einem bevorzugten Ausführungsbeispiel der in Fig. 3 und 4 gezeigten Fadenklemmvorrichtung.

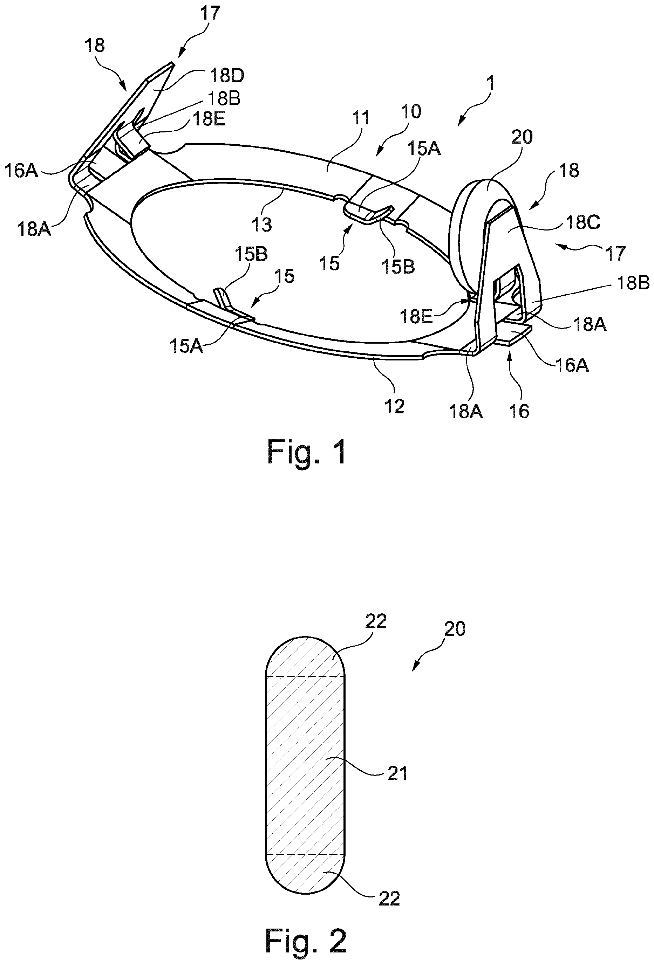

Figur 1 zeigt eine perspektivische Ansicht einer Be- und Entlastungseinrichtung 1 umfassend ein Federringelement 10 nach einem bevorzugten Ausführungsbeispiel. Das Federringelement 10 ist aus einem Federstahlblech insbesondere mittels eines Stanz- und Biegeverfahrens hergestellt.

Das Federringelement 10 umfasst einen ringförmigen Ringflächenabschnitt 11, der von einem äußeren Rand 12 zu einem inneren Rand 13 geneigt ist. Mit anderen Worten bildet der Ringflächenabschnitt 11 ein Kegelsegment aus.

Das Federringelement 10 umfasst eine innere Halteeinrichtung 15, welche an dem inneren Rand 13 zum Anschluss an eine stationäre Unterwindehülse einer Spinn- oder Zwirnmaschinenspindel angeordnet ist. Die innere Halteeinrichtung 15 ist bei diesem bevorzugten Ausführungsbeispiel durch zwei sich gegenüberliegende innere Haltemittel 15A, 15B ausgeformt, die von dem inneren Rand 13 in Richtung der Federringelementmitte 10 abragen. Die inneren Haltemittel 15A, 15B sind identisch zueinander ausgeformt und weisen querschnittlich eine V-Form auf. Die V-Form ist bei diesem Ausführungsbeispiel durch einen ersten Flächenabschnitt 15A gebildet, der eine Fortsetzung des Ringflächenabschnitts 11 über den inneren Rand 13 in Richtung der Federringelementmitte ist. In Umfangsrichtung des inneren Randes 13 ist an dem ersten Flächenabschnitt 15A ein zweiter Flächenabschnitt 15B angeordnet, welcher winklig mit einem Winkel ungleich 90° von dem ersten Flächenabschnitt 15A abragt, um die V-Form auszuformen. Alternativ dazu kann der zweite Flächenabschnitt 15B nach einem nicht dargestellten Ausführungsbeispiel mit einem Winkel von gleich 90° zu dem ersten Flächenabschnitt 15A angestellt sein, um eine zu der V-Form alternative L-Form auszubilden.

Das Federringelement 10 weist ferner eine äußere Halteeinrichtung 16 auf, welche an dem äußeren Rand 12 zum Anschluss an ein relativ zu der stationären Unterwindehülse verschiebbares Klemmelement der Spinn- oder Zwirnmaschinenspindel angeordnet ist. Die äußere Halteeinrichtung 16 ist bei diesem bevorzugten Ausführungsbeispiel durch zwei von dem äußeren Rand 12 abragende, scheibenförmige äußere Haltemittel 16A ausgebildet, die auf gegenüberliegenden Seiten des äußeren Randes 12 angeordnet sind und von diesem innerhalb der von dem Ringflächenabschnitt 11 aufgespannten Ebene abragen. Die äußeren Haltemittel 16A sind bei diesem Ausführungsbeispiel mit Blick auf die inneren Haltemittel 15 umläufig des Ringflächenabschnittes 11 jeweils um 90° versetzt angeordnet.

In dem Bereich des jeweiligen äußeren Haltemittels 16 sind Halte- und Führungsmittel 18 einer Halte- und Führungseinrichtung 17 zum führenden Halten von Fliehkraftelementen 20 angeordnet. Figur 1 zeigt exemplarisch die Anordnung eines Fliehkraftelementes 20 an einem der Halte-und Führungsmittel 18. Die Halte- und Führungsmittel 18 sind zueinander identisch ausgebildet. Das Halte- und Führungsmittel 18 nach diesem Ausführungsbeispiel umfasst einen zweischenkligen Verbindungsabschnitt 18A, welcher von dem äußeren Rand 12 in der von dem Ringflächenabschnitt 11 aufgespannten Ebene unter Einfassung des äußeren Haltemittels 16A abragt und über eine Krümmung mit einem Winkel von kleiner als 90° in einen gemeinsamen Halteabschnitt 18B übergeht, der in einem von dem Ringflächenabschnitt 11 beabstandeten Endbereich einen trapezartigen Flächenabschnitt 18C, 18D ausformt. Der Winkel ist im stabilen Zustand der Be-und Entlastungseinrichtung 1 derart bedarfsgerecht auszuwählen, dass die gemeinsamen Halteabschnitte 18B im metastabilen Zustand in idealer Weise zueinander parallel verlaufen bzw. ausgerichtet sind. Der Winkelbereich kann sich, auch unter Berücksichtigung möglicher unterschiedlicher Dicken des Fliehkraftelementes 20, vorzugsweise in einem Bereich von 70° bis einschließlich 80° erstrecken.

An der dem äußeren Haltemittel 16A gegenüberliegenden Grundseite des trapezartigen Flächenabschnitts 18C, 18D ist ein zu dem trapezartigen Flächenabschnitt 18C, 18D winklig angestellter, sich in Richtung der Federringelementmitte erstreckender unterer Auflageabschnitt 18E angeordnet. Der der Federringelementmitte zugewandte trapezartige Flächenabschnitt bildet dabei einen seitlichen Anlageabschnitt 18D aus. Der seitliche Anlageabschnitt 18D und der untere Auflageabschnitt 18E formen querschnittlich eine L-Form zum Halten und Führen des Fliehkraftelementes 20 beabstandet zu dem Ringflächenabschnitt 11 in einem montierten Zustand der Be- und Entlastungseinrichtung 1 in einer Federklemmvorrichtung aus.

Das mit Figur 1 gezeigte Federringelement 10 befindet sich in einem stabilen Zustand, welcher sich ohne äußere Krafteinwirkung nicht ändert.

Das mit Figur 2 im Querschnitt gezeigte Fliehkraftelement 20 nach einem bevorzugten Ausführungsbeispiel weist eine dropsförmige Gestalt. Die Dropsform ist querschnittlich gekennzeichnet durch eine im Bereich der Dropsmitte 21 ausgebildeten Zylinder sowie eines im Bereich des Dropsrandes 22 ausgeformten Halbkreises oder einer Halbellipse. Das Fliehkraftelement 20 kann aus einem metall-, kunststoff-, kautschuk-, keramikhaltigen Material oder einer Kombination dieser Materialien ausgebildet sein.

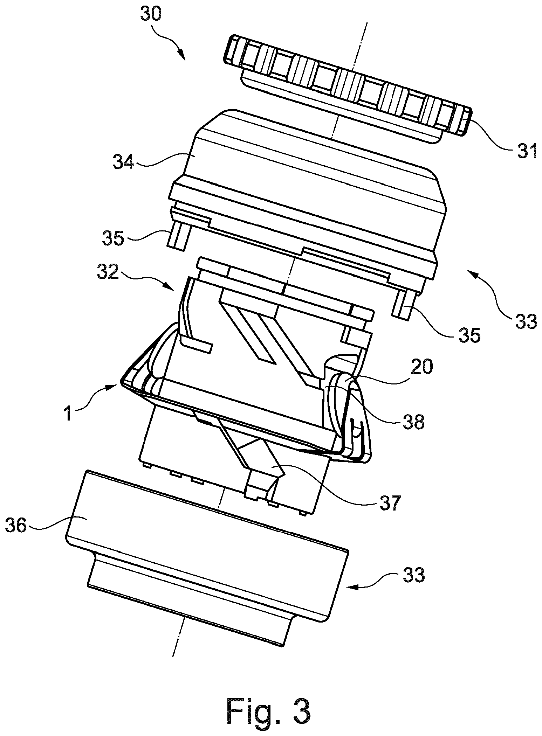

Figur 3 zeigt eine Seitenansicht einer Explosionsdarstellung einer Fadenklemmvorrichtung 30 nach einem bevorzugten Ausführungsbeispiel umfassend die vorstehend beschriebene Be- und Entlastungseinrichtung 1 mit einem Federringelement 10 in einem stabilen Zustand.

Bekanntlich sind Spindeln von Ringspinn- oder Zwirnmaschinen mit Fadenklemmvorrichtungen ausgestattet, die im Rahmen eines Spinnhülsenwechsels in üblicher Weise zum Einsatz kommt. Das heißt, die Fadenklemmvorrichtung wird benötigt, wenn Spinnkopse der Spindeln fertiggestellt sind und gemeinsam nach oben von ihren Spindeln abgezogen und durch neue Spinnhülsen ersetzt werden müssen.

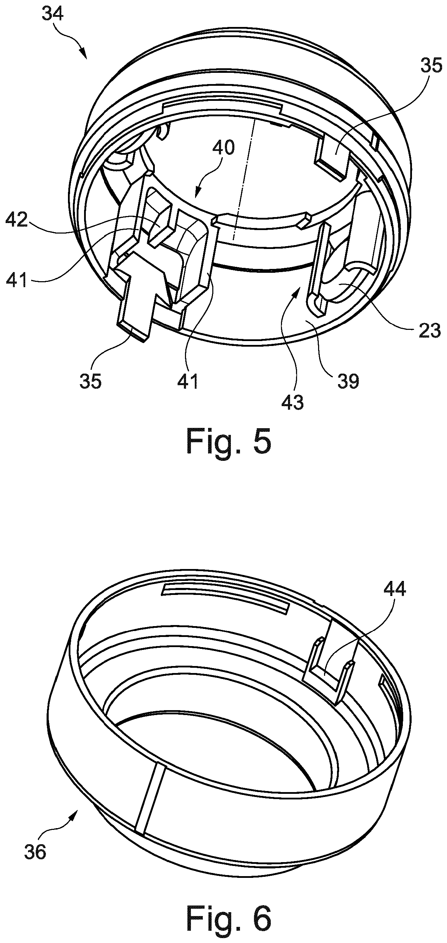

Die mit Figur 3 gezeigte Fadenklemmvorrichtung 30 kann dabei zum Einsatz gelangen. Die Fadenklemmvorrichtung 30 umfasst ein an einem Spindeloberteil der Spindel stationär anordbares erstes Klemmelement 31, eine ebenfalls am Spindeloberteil benachbart zu dem ersten Klemmelement 31 stationär anordbare Unterwindehülse 32 sowie ein relativ zu der Unterwindehülse 32, axial zu der Längsachse der Unterwindehülse 32 verschiebbares zweites Klemmelement 33, welche auch als Schiebehülse bekannt ist. Das zweite Klemmelement 33 ist zweiteilig aus einem Deckelelement 34 und einem Bodenelement 36 ausgebildet, welche miteinander bspw. über eine Rastverbindung verbindbar sind. Das Deckelelement 34 umfasst zwei in Richtung des Bodenelementes 36 ragende Ansätze 35, welche in einem verbundenen Zustand des zweiten Klemmelementes 33 unter Zwischenlage der äußeren Haltemittel 16A mit entsprechend im Bodenelement 36 ausgebildeten Anlage- bzw. Klemmflächenabschnitten 44 (vgl. Figur 6) zum Klemmen der zwischenliegenden äußeren Haltemittel 16A zusammenwirken. Das Klemmen kann bedarfsweise spielbehaftet oder spielfrei erfolgen.

Das Deckelelement 34 und das Bodenelement 36 sorgen neben der Kopplung der äußeren Haltemittel 16A mit dem zweiten Klemmelement 33 für einen Schutz der zwischen dem zweiten Klemmelement 33 und der Unterwindehülse 32 angeordneten Be- und Entlastungseinrichtung 1 mitsamt der Fliehkraftelemente 20.

Die Unterwindehülse 32 ist mit Aussparungen 37 zur jeweiligen Aufnahme eines der inneren Haltemittel 15 des Federringelements 10 ausgestattet, wobei sich die Aussparungen 37 von einer Unterseite der Unterwindehülse 32 über einen Eingang, einen winklig dazu angestellten Verbindungsgang und einen in Umfangsrichtung der Unterwindehülse 32 verlaufenden Endgang erstrecken. Das Federringelement 10 wird entsprechend über Einführen der inneren Haltemittel 15A, 15B in den Eingang, über unter leichter Drehung in Umfangsrichtung der Unterwindehülse 32 fortschreitendes Einsetzen in den Verbindungsgang und über unter leichter Drehung in Umfangsrichtung der Unterwindehülse 32 bis zum Erreichen des Endgangs an der Unterwindehülse 32 festgelegt, wobei die inneren Haltemittel 15A, 15B vorzugsweise spielbehaftet in den Endgang eingreifen, um eine Beeinflussung der Federcharakteristik zu vermeiden. Die vorstehend beschriebene V- bzw. L-Form der inneren Haltemittel 15A, 15B begünstigt ein ungehindertes Gleiten innerhalb der Aussparung 37 insbesondere beim Verbringen der Fadenklemmeinrichtung 30 in eine Reinigungsstellung.

Die Unterwindehülse 32 weist umfangsseitig einen außenseitigen Anschlagflächenabschnitt 38 auf, an dem das Fliehkraftelement 20 in dem in Figur 3 gezeigten stabilen Zustand des Federringelements 20 anliegt. Das Fliehkraftelement 20 ist in dem stabilen Zustand zwischen dem Halteabschnitt 18 und dem außenseitigen Anschlagflächenabschnitt 38, insbesondere geklemmt angeordnet. Der stabile Zustand des Federringelements 20 korrespondiert dabei in bekannter Weise zu einer Schließstellung der Fadenklemmvorrichtung 30, in welcher ein Faden zuverlässig fixiert werden kann.

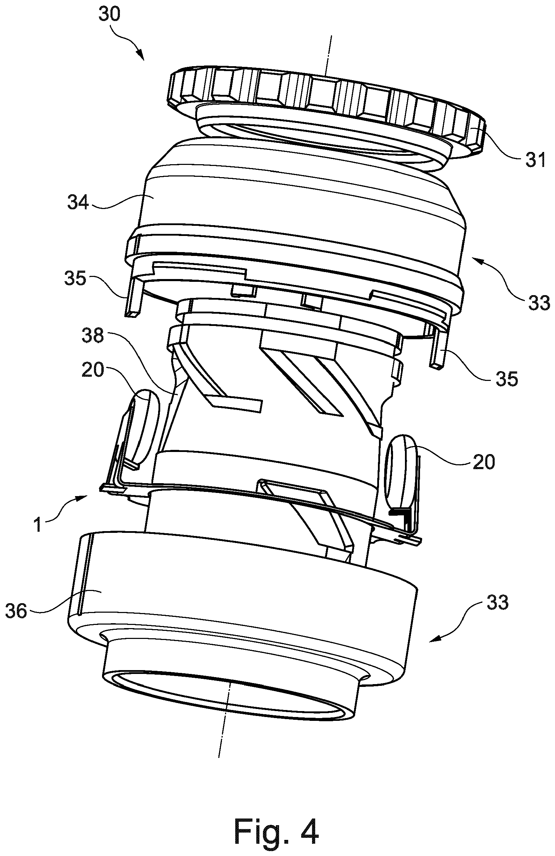

Die Figur 4 zeigt eine Seitenansicht einer Explosionsdarstellung der Fadenklemmvorrichtung 30 in einem metastabilen Zustand der Be- und Entlastungseinrichtung 1 bzw. des Federringelements 10. Im Unterschied zu der Figur 3 sind die Fliehkraftelemente 20 in einer zu der Anschlagfläche 38 radial beabstandeten Position gezeigt, wobei sich die Be- und Entlastungseinrichtung 1 bzw. das Federringelement 10 in dem metastabilen Zustand befindet. Diese Position nehmen die Fliehkraftelemente 20 und das Federringelement 10 ein, wenn eine die Fadenklemmvorrichtung 30 umfassende Spindel nach einem Spinnkopswechsel auf Betriebsdrehzahl beschleunigt wird. Bei Überschreiten eines vorbestimmten Drehzahlniveaus, das kleiner als die Betriebsdrehzahl ist, schlägt das Federringelement 10 durch die Krafteinwirkung der in den Aufnahmen des Federringelementes 10 angeordneten Fliehkraftelemente 20 schlagartig durch elastische Verformung und ggf. Abgabe eines Knackgeräusches von dem mit Figur 3 gezeigten stabilen Zustand in den mit Figur 4 gezeigten metastabilen Zustand um. Der Übergang von dem stabilen Zustand in den metastabilen Zustand führt zu einer Relativbewegung des äußeren Randes 12, somit des zweiten Klemmelementes 33, zu dem inneren Rand 13, folglich zu der Unterwindehülse 32 und dem ersten Klemmelement 31 in einer von dem ersten Klemmelement 31 wegführenden Richtung. Das zweite Klemmelement 33 gelangt dadurch in eine zu dem ersten Klemmelement 31 beabstandete metastabile Position im Sinne "Öffnen der Fadenklemmvorrichtung", in welcher ein zuvor zwischen dem ersten Klemmelement 31 und dem zweiten Klemmelement 33 eingeklemmter Faden wieder freigegeben wird.

Wenn die Spindeln beispielsweise im Zuge eines anstehenden Spinnhülsenwechsels in den Stillstand zurückgefahren werden, kommt es zu einer kontinuierlichen Verringerung der Spindeldrehzahlen und damit auch zu einer Verringerung der durch die Fliehkraftelemente 20 auf das Federringelement 10 einwirkenden Kräfte. Bei einem vorbestimmten Drehzahlniveau erfolgt dann ein schlagartiges Zurückspringen des Federringelementes 10 von dem metastabilen Zustand in den mit Figur 3 gezeigten stabilen Zustand. Bei diesem Zurückspringen, bei dem abermals ein Knackgeräusch erfolgen kann, wird die Fadenklemmvorrichtung 10 in einen Schließzustand im Sinne "Schließen der Fadenklemmvorrichtung" überführt.

Figur 5 zeigt eine perspektivische Unteransicht des Deckelementes 34 des zweiten Klemmelementes 33. Das Deckelelement 34 umfasst auf einer der Unterwindehülse 32 gegenüberliegenden Innenseite 39 Aufnahmeeinrichtungen 40 zur jeweiligen Aufnahme eines Fliehkraftelements 20 in dem metastabilen Zustand des Federringelementes 10, wobei die Aufnahmeeinrichtung 40 Haltestege 41 aufweist, die sich in Umfangsrichtung des Deckelelementes 34 zur zwischenliegenden Anordnung des Fliehkraftelementes 20 einander gegenüberliegen. Dadurch kann in dem metastabilen Zustand ein in Umfangsrichtung des Deckelelementes 34 seitliches Entweichen des in der Aufnahme 18D, 18E lose aufgenommenen Fliehkraftelementes 20 unterbunden werden. Des Weiteren weist das Deckelement 34 in einem Bereich zwischen den Haltestegen 41 einen Kopfsteg 42 zum Unterbinden eines Entweichens des aufgenommenen Fliehkraftelementes 20 in Richtung des ersten Klemmelementes 31 bzw. in einer dem Bodenelement 36 des zweiten Klemmelementes 33 entgegengesetzten Richtung. Das in dem metastabilen Zustand aufgenommene Fliehkraftelement 20 kann dadurch zuverlässig gehalten werden.

Weiterhin umfasst das Deckelelement 34 auf der Innenseite einander gegenüberliegende weitere Aufnahmen 43 zur haltenden Aufnahme jeweils eines Kompensationselementes 23 zur Vermeidung einer möglichen fliehkraftbedingten Verformung.

**Bezugszeichenliste**

| | | | |
|---|---|---|---|
| 1 | Be- und Entlastungseinrichtung | 42 | Kopfsteg |
| 10 | Federringelement | 43 | weitere Aufnahme |
| 11 | Ringflächenabschnitt | 44 | Anlage- und Klemmflächenab- |
| 12 | äußerer Rand | | schnitt |
| 13 | innerer Rand | | |
| 15 | innere Halteeinrichtung | | |
| 15A | erster Flächenabschnitt | | |
| 15B | zweiter Flächenabschnitt | | |
| 16 | äußere Halteeinrichtung | | |
| 16A | äußere Haltemittel | | |
| 17 | Halte- und Führungseinrichtung | | |
| 18 | Halte- und Führungsmittel | | |
| 18A | Verbindungsabschnitt | | |
| 18B | Halteabschnitt | | |
| 18C | trapezartiger Flächenabschnitt | | |
| 18D | seitlicher Anlageabschnitt | | |
| 18E | unterer Auflageabschnitt | | |
| 20 | Fliehkraftelement | | |
| 21 | Dropsmitte | | |
| 22 | Dropsrand | | |
| 23 | Kompensationselement | | |
| 30 | Fadenklemmvorrichtung | | |
| 31 | erstes Klemmelement | | |
| 32 | Unterwindehülse | | |
| 33 | zweites Klemmelement | | |
| 34 | Deckelelement | | |
| 35 | Ansatz | | |
| 36 | Bodenelement | | |
| 37 | Aussparung | | |
| 38 | Anschlagflächenabschnitt | | |
| 39 | Innenseite des Deckelelementes | | |
| 40 | Aufnahmeeinrichtung | | |
| 41 | Haltesteg | | |

## Patentansprüche

1. Be- und Entlastungseinrichtung (1) für eine Fadenklemmvorrichtung (30) einer drehbeweglichen Spinn- oder Zwirnmaschinenspindel, wobei die Be- und Entlastungseinrichtung (1) umfasst
ein Federringelement (10), welches zwischen einem stabilen Zustand und einem metastabilen Zustand schlagartig überführbar ist,
eine innere Halteeinrichtung (15), welche an einem inneren Rand (13) des Federringelements (10) zum Anschluss an eine stationäre Unterwindehülse (32) der Spinn- oder Zwirnmaschinenspindel angeordnet ist,
eine äußere Halteeinrichtung (16), welche an einem äußeren Rand (12) des Federringelements (10) zum Anschluss an ein relativ zu der stationären Unterwindehülse (32), axial zu der Längsachse der Unterwindehülse (32) verschiebbares Klemmelement (33) der Spinn- oder Zwirnmaschinenspindel angeordnet ist, und
eine Halte- und Führungseinrichtung (17) zum führenden Halten von Fliehkraftelementen (20) zwischen einer stabilen Position und einer metastabilen Position, welche durch eine Relativbewegung zwischen der äußeren (16) und inneren Halteeinrichtung (15) einnehmbar sind, wobei das Federringelement (10) in der stabilen Position den stabilen Zustand und in der metastabilen Position den metastabilen Zustand einnimmt,
**dadurch gekennzeichnet, dass**
die Halte- und Führungseinrichtung (17) wenigstens eine Aufnahme (18D, 18E) für ein Fliehkraftelement (20) aufweist, welche von einem den inneren (13) und äußeren Rand (12) miteinander koppelnden Ringflächenabschnitt (11) des Federringelements (10) beabstandet angeordnet ist.

2. Be- und Entlastungseinrichtung (1) nach Anspruch 1, **dadurch gekennzeichnet, dass** die innere Halteeinrichtung (15) ein querschnittlich V- oder L- förmiges Halteelement zum insbesondere spielbehafteten Eingriff mit einer dazu korrespondierenden Aussparung (37) der Unterwindehülse (32) aufweist.

3. Be- und Entlastungseinrichtung (1) nach Anspruch 1 oder 2, **dadurch gekennzeichnet, dass** die innere Halteeinrichtung (15) oder die äußere Halteeinrichtung (16) zwei Haltelemente (15A, 15B; 16) aufweist, die an sich gegenüberliegenden Ringsegmenten des Federringelementes (10) angeordnet sind.

4. Be- und Entlastungseinrichtung (1) nach einem der vorherigen Ansprüche, **dadurch gekennzeichnet, dass** die Aufnahme (18D, 18E) einen dem Ringflächenabschnitt (11) gegenüberliegenden und zu diesem beabstandeten unteren Auflageabschnitt (18E) für das Fliehkraftelement (20) und einen seitlichen Anlageabschnitt (18D) zur Anlage des Fliehkraftelementes (20) auf einer der Unterwindehülse (32) abgewandten Seite des Fliehkraftelementes (20) aufweist, wobei die Aufnahme (18D, 18E) insbesondere querschnittlich L-förmig ausgebildet ist.

5. Be- und Entlastungseinrichtung (1) nach einem der vorherigen Ansprüche, **dadurch gekennzeichnet, dass** die Halte- und Führungseinrichtung (17) einen die Aufnahme (18D, 18E) tragenden Halteabschnitt (18B) aufweist, welcher sich schräg zu einer den Ringflächenabschnitt (11) umfassenden Flächenebene erstreckt und an dem äußeren Rand (12) angeordnet oder mit diesem über einen von dem äußeren Rand (12) in einer von der Federringelementmitte wegweisenden Richtung abragenden Verbindungsabschnitt (18A) gekoppelt ist.

6. Be- und Entlastungseinrichtung (1) nach einem der vorherigen Ansprüche, **dadurch gekennzeichnet, dass** die Be- und Entlastungsvorrichtung (1) Fliehkraftelemente (20) umfasst, die eine dropsförmige Gestalt aufweisen, welche im mittleren Bereich (21) eine andere Dicke als im Randbereich (22) haben.

7. Fadenklemmvorrichtung (30) für eine Spinn- oder Zwirnmaschinenspindel, mit einem an einem Spindeloberteil der Spinn- oder Zwirnmaschinenspindel stationär anordbaren ersten Klemmelement (31),
einer an dem Spindeloberteil benachbart zu dem ersten Klemmelement (31) stationär anordbaren Unterwindehülse (32),
einem relativ zu der Unterwindehülse (32), axial zu der Längsachse der Unterwindehülse (32) axial verschiebbaren zweiten Klemmelement (33),
wobei die Fadenklemmvorrichtung (30) die Be- und Entlastungseinrichtung (1) nach einem der vorherigen Ansprüche umfasst, wobei das Federringelement (10), das zwischen einem stabilen Zustand, in welchem das zweite Klemmelement (33) in Richtung des ersten Klemmelementes (31) federkraftbedingt beaufschlagt ist, und einem metastabilen Zustand, in welchem das zweite Klemmelement (33) fliehkraftbedingt durch auf das Federringelement (10) einwirkende Fliehkraftelement (20) beabstandet zu dem ersten Klemmelement (31) positioniert ist, schlagartig überführbar ist, wobei das Fliehkraftelement (20) zwischen der Unterwindehülse (32) und dem zweiten Klemmelement (33) bewegbar anordbar ist,
wobei die Unterwindehülse (32) einen außenseitigen Anschlagflächenabschnitt (38) für das Fliehkraftelement (20) oder für einen das Fliehkraftelement (20) haltenden Aufnahmeabschnitt aufweist, gegen welchen das Fliehkraftelement (20) bzw. der Aufnahmeabschnitt in Folge des schlagartigen Überführens des Federringelements (10) in den stabilen Zustand zur Anlage gelangt.

8. Fadenklemmvorrichtung (30) nach Anspruch 7, **dadurch gekennzeichnet, dass** das zweite Klemmelement (33) auf einer der Unterwindehülse (32) gegenüberliegenden Innenseite eine Aufnahmeeinrichtung (40) zur Aufnahme des Fliehkraftelements (20) in dem metastabilen Zustand des Federringelementes (10) aufweist, wobei die Aufnahmeeinrichtung (40) Haltestege (41) aufweist, die in Umfangsrichtung des zweiten Klemmelementes (33) zur zwischenliegenden Anordnung des Fliehkraftelementes (20) einander gegenüberliegen.

9. Fadenklemmvorrichtung (30) nach Anspruch 7 oder 8, **dadurch gekennzeichnet, dass** das zweite Klemmelement (33) auf einer der Unterwindehülse (32) gegenüberliegenden Innenseite eine weitere Aufnahme (43) zur haltenden Aufnahme eines Kompensationselementes (23) zur Vermeidung einer fliehkraftbedingten Verformung aufweist.

10. Fadenklemmvorrichtung (30) nach einem der Ansprüche 7 bis 9, **dadurch gekennzeichnet, dass** das zweite Klemmelement (33) aus einem Deckelelement (34) und einem mit dem Deckelelement (34) verbindbaren Bodenelement (36) ausgebildet ist.

11. Fadenklemmvorrichtung (30) nach einem der Ansprüche 7 bis 10, **dadurch gekennzeichnet, dass** wenigstens eines der Fliehkraftelemente (20) zwischen einer dem Federringelement (10) zugeordneten Aufnahme (18D, 18E) zur Aufnahme des Fliehkraftelementes (20) und dem außenseitigen Anschlagflächenabschnitt (38) in einem stabilen Zustand der Fadenklemmvorrichtung (30) mittels der von dem Federringelement (10), insbesondere mittels der von der Aufnahme (18D, 18E) auf das Fliehkraftelement wirkende Federkraft geklemmt ist.

## Claims

1. A loading and relieving device (1) for a thread clamping apparatus (30) of a rotationally movable spinning or twisting machine spindle, the loading and relieving device (1) comprising
a spring ring element (10), which can be abruptly transferred between a stable state and a metastable state,
an inner retaining device (15), which is arranged on an inner edge (13) of the spring ring element (10) for connection to a stationary underwinding sleeve (32) of the spinning or twisting machine spindle,
an outer retaining device (16), which is arranged on an outer edge (12) of the spring ring element (10) for connection to a clamping element (33) of the spinning or twisting machine spindle, which clamping element can be slid relative to the stationary underwinding sleeve (32) axially with respect to the longitudinal axis of the underwinding sleeve (32), and
a retaining and guiding device (17) for retaining centrifugal-force elements (20) in a guiding manner between a stable position and a metastable position, which can be assumed by means of a relative movement between the outer retaining device (16) and the inner retaining device (15), the spring ring element (10) assuming the stable state in the stable position and the metastable state in the metastable position,
**characterised in that**
the retaining and guiding device (17) has at least one receptacle (18D, 18E) for a centrifugal-force element (20), which receptacle is arranged at a distance from a ring surface portion (11) of the spring ring element (10), the ring surface portion coupling the inner edge (13) and the outer edge (12) to one another.

2. The loading and relieving device (1) according to claim 1, **characterised in that** the inner retaining device (15) has a cross-sectionally V- or L-shaped holding element for engaging, more particularly with play, with a corresponding recess (37) of the underwinding sleeve (32).

3. The loading and relieving device (1) according to claim 1 or 2, **characterised in that** the inner retaining device (15) or the outer retaining device (16) has two holding elements (15A, 15B; 16), which are arranged on ring segments of the spring ring element (10) that lie opposite one another.

4. The loading and relieving device (1) according to one of the preceding claims, **characterised in that** the receptacle (18D, 18E) has a lower support portion (18E) for the centrifugal-force element (20), which lower support portion lies opposite the ring surface portion (11) and is spaced apart therefrom, and a lateral contact portion (18D) for contacting the centrifugal-force element (20) on a side of the centrifugal-force element (20) facing away from the underwinding sleeve (32), the receptacle (18D, 18E) more particularly being L-shaped in cross-section.

5. The loading and relieving device (1) according to one of the preceding claims, **characterised in that** the retaining and guiding device (17) has a retaining portion (18B), which supports the receptacle (18D, 18E) and extends obliquely to a surface plane comprising the ring surface portion (11) and is arranged on the outer edge (12) or is coupled thereto by means of a connection portion (18A), which protrudes from the outer edge (12) in a direction away from the spring ring element centre.

6. The loading and relieving device (1) according to one of the preceding claims, **characterised in that** the loading and relieving device (1) comprises centrifugal-force elements (20), which have a drop-shaped form with a different thickness in the central area (21) than in the edge area (22).

7. A thread clamping apparatus (30) for a spinning or twisting machine spindle, comprising a first clamping element (31), which can be stationarily arranged on a spindle upper part of the spinning or twisting machine spindle,
an underwinding sleeve (32), which can be stationarily arranged on the spindle upper part adjacently to the first clamping element (31),
a second clamping element (33), which can be slid relative to the underwinding sleeve (32) axially with respect to the longitudinal axis of the underwinding sleeve (32),
in which case the thread clamping apparatus (30) comprises the loading and relieving device (1) according to one of the preceding claims; in which case the spring ring element (10), which can be abruptly transferred between a stable state, in which the second clamping element (33) is loaded towards the first clamping element (31) as a result of spring force, and a metastable state, in which the second clamping element (33) is positioned at a distance from the first clamping element (31) as a result of centrifugal force by means of a centrifugal-force element (20) which acts on the spring ring element (10); in which case the centrifugal-force element (20) can be movably arranged between the underwinding sleeve (32) and the second clamping element (33),
and in which case the underwinding sleeve (32) has an outside stop surface portion (38) for the centrifugal-force element (20) or for a holding portion retaining the centrifugal-force element (20), against which outside stop surface portion the centrifugal-force element (20) or the holding portion comes into contact as a result of the abrupt transfer of the spring ring element (10) into the stable state.

8. The thread clamping apparatus (30) according to claim 7, **characterised in that** the second clamping element (33) has, on an inner side facing the underwinding sleeve (32), a holding device (40) for holding the centrifugal-force element (20) in the metastable state of the spring ring element (10), the holding device (40) having retaining flanges (41), which lie opposite one another in the circumferential direction of the second clamping element (33) for the arrangement of the centrifugal-force element (20) therebetween.

9. The thread clamping apparatus (30) according to claim 7 or 8, **characterised in that** the second clamping element (33) has, on an inner side facing the underwinding sleeve (32), a further receptacle (43) for holding a compensation element (23) in a retaining manner in order to avoid deformation due to centrifugal force.

10. The thread clamping apparatus (30) according to one of claims 7 to 9, **characterised in that** the second clamping element (33) is formed from a cover element (34) and a bottom element (36), which can be connected to the cover element (34).

11. The thread clamping apparatus (30) according to one of claims 7 to 10, **characterised in that** at least one of the centrifugal-force elements (20) is clamped between a receptacle (18D, 18E) for holding the centrifugal-force element (20), which receptacle is associated with the spring ring element (10), and the outside stop surface portion (38) in a stable state of the thread clamping apparatus (30) by means of the spring force applied to the centrifugal-force element by the spring ring element (10), more particularly by the receptacle (18D, 18E).

## Revendications

1. Dispositif de chargement et de déchargement (1) pour un dispositif de serrage de fil (30) d'une machine à filer ou à retordre montée de manière à permettre une rotation, où le dispositif de chargement et de déchargement (1) comprend
une rondelle-ressort concentrique (10) qui peut passer instantanément d'un état stable à un état métastable,
un dispositif de retenue interne (15), qui est disposé sur un bord intérieur (13) de la rondelle-ressort concentrique (10) pour le raccordement à une douille d'enroulement (32) fixe de la machine à filer ou à retordre,
un dispositif de retenue externe (16), qui est fixé sur un bord extérieur (12) de la rondelle-ressort concentrique (10) pour le raccordement à un élément de serrage (33) de la machine à filer ou à retordre qui peut se déplacer axialement sur l'axe longitudinal de douille d'enroulement (32), par rapport à la douille d'enroulement (32) fixe, et
un dispositif de retenue et de guidage (17) pour retenir le guidage des éléments centrifuges (20) entre une position stable et une position métastable, qui peuvent être prises par un mouvement relatif entre les dispositifs de retenue externe (16) et interne (15), la rondelle-ressort concentrique (10) adoptant l'état stable dans la position stable et l'état métastable dans la position métastable,
**caractérisé en ce que**
le dispositif de retenue et de guidage (17) présente au moins un logement (18D, 18E) pour un élément centrifuge (20), qui est espacé de la section de la surface annulaire (11) couplée de la rondelle-ressort concentrique (10) raccordant les bords intérieur (13) et extérieur (12) l'un à l'autre.

2. Dispositif de chargement et de déchargement (1) selon la revendication 1, **caractérisé en ce que** le dispositif de retenue interne (15) comporte un élément de retenue transversal en forme de V ou de L pour un engagement particulier avec du jeu dans un évidement (37) correspondant de la douille d'enroulement (32).

3. Dispositif de chargement et de déchargement (1) selon la revendication 1 ou 2, **caractérisé en ce que** le dispositif de retenue interne (15) ou le dispositif de retenue externe (16) comporte deux éléments de retenue (15A, 15B ; 16) qui sont disposés sur des segments annulaires opposés de la rondelle-ressort concentrique (10).

4. Dispositif de chargement et de déchargement (1) selon une des revendications précédentes, **caractérisé en ce que** le logement (18D, 18E) présente une partie de support inférieure (18E) pour l'élément centrifuge (20), opposée à la section de la surface annulaire (11) et espacée de celle-ci, et une partie de support latérale (18D) pour le support de l'élément centrifuge (20) sur un côté de l'élément centrifuge (20) opposé à la douille d'enroulement (32), le logement (18D, 18E) étant en particulier en forme de L transversal.

5. Dispositif de chargement et de déchargement (1) selon une des revendications précédentes, **caractérisé en ce que** le dispositif de retenue et de guidage (17) comporte une partie de support (18B) portant le logement (18D, 18E), s'étendant de façon oblique par rapport à un plan de surface comprenant une section de surface annulaire (11) et disposé sur le bord extérieur (12) ou couplé à celui-ci par une partie de raccord (18A) s'étendant depuis le bord extérieur (12) dans une direction s'éloignant du centre de la rondelle-ressort concentrique.

6. Dispositif de chargement et de déchargement (1) selon une des revendications précédentes, **caractérisé en ce que** le dispositif de chargement et de déchargement (1) comporte des éléments centrifuges (20) en forme de goutte dont l'épaisseur de la zone centrale (21) est différente de celle de la zone latérale (22).

7. Dispositif de serrage de fil (30) pour une machine à filer ou à retordre, doté d'un premier élément de serrage (31) pouvant être disposé de manière fixe sur une partie supérieure de la broche de la machine à filer ou à retordre,
d'une douille d'enroulement (32) pouvant être disposée de manière fixe sur la partie supérieure de la broche adjacente au premier élément de serrage (31),
d'un deuxième élément de serrage (33) pouvant être déplacé manière axiale par rapport à la douille d'enroulement (32), sur l'axe longitudinal de la douille d'enroulement (32),
le dispositif de serrage de fil (30) comprenant le dispositif de chargement et de déchargement (1) selon l'une des revendications précédentes, la rondelle-ressort concentrique (10) pouvant passer d'un état stable, dans lequel le deuxième élément de serrage (33) est sollicité par la force du ressort en direction du premier élément de serrage (31), à un état métastable, dans lequel le deuxième élément de serrage (33) est transférable instantanément en raison de la force centrifuge de l'élément centrifuge (20) agissant sur la rondelle-ressort concentrique (10) vers le premier élément de serrage (31), l'élément centrifuge (20) pouvant être disposé de manière mobile entre la douille d'enroulement (32) et le deuxième élément de serrage (33),
la douille d'enroulement (32) présentant une partie de surface de butée (38) côté extérieur pour l'élément centrifuge (20) ou pour une partie de logement maintenant l'élément centrifuge (20), contre laquelle l'élément centrifuge (20) ou la partie de logement vient en butée à la suite du transfert par à-coups de la rondelle ressort concentrique (10) dans l'état stable.

8. Dispositif de serrage de fil (30) selon la revendication 7, **caractérisé en ce que** le deuxième élément de serrage (33) présente, sur un côté intérieur opposé à la douille d'enroulement (32), un dispositif de réception (40) destiné au logement de l'élément centrifuge (20) dans l'état métastable de la rondelle-ressort concentrique (10), le dispositif de réception (40) présentant des nervures de retenue (41) qui sont opposées les unes aux autres dans la direction circonférentielle du deuxième élément de serrage (33) pour la disposition intermédiaire de l'élément centrifuge (20).

9. Dispositif de serrage de fil (30) selon la revendication 7 ou 8, **caractérisé en ce que** le deuxième élément de serrage (33) comporte un logement supplémentaire (43) sur l'une des douilles d'enroulement (32) pour la retenue d'un élément de compensation (23) afin d'empêcher une déformation due à la force centrifuge.

10. Dispositif de serrage de fil (30) selon les revendications 7 à 9, **caractérisé en ce que** le deuxième élément de serrage (33) est formé d'un élément de couvercle (34) et d'un élément de base (36) pouvant être relié à un élément de couvercle (34).

11. Dispositif de serrage de fil (30) selon les revendications 7 à 10, **caractérisé en ce qu'**au moins un des éléments de force centrifuge (20) est serré entre un logement (18D, 18E) associé à une rondelle-ressort concentrique (10) pour le logement d'un élément centrifuge (20) et une partie de surface de butée (38) côté extérieur dans état stable du dispositif de serrage de fil (30) au moyen de l'élément de force centrifuge de l'élément centrifuge (10), en particulier au moyen de la force du ressort agissant sur l'élément centrifuge du logement (18D, 18E).
